# EUROPEAN PATENT APPLICATION

(11) **EP 0 638 872 A1**
(43) Date of publication of application: **15.02.1995**
(21) Application number: 94201935.7
(22) Date of filing: 04.07.1994
(51) Int. Cl.: G06K 19/07, G06K 7/12, G06K 7/10, G06K 7/08

(54) **An electronic indentification system with fast communication and a label for this system**

(30) Priority: 05.07.1993 NL 9301169
(71) Applicant: N.V. Nederlandsche Apparatenfabriek NEDAP, NL-7141 DE Groenlo (NL)
(72) Inventor: Kip, Harm Jacob, NL-7132 CS Lichtenvoorde (NL)
(74) Representative: Smulders, Theodorus A.H.J., Ir.

(57) **Abstract**

An electronic identification system comprising a transmitter and receiver unit for generating an electromagnetic field modulated with information to be transferred to a label. The label comprises at least one resonance circuit for receiving and further processing the information and further comprises control means for temporarily enlarging the bandwidth of the resonance circuit for correspondingly enlarging the information flow between the transmitter and receiver unit and the label. The label further comprises a limiter circuit, comprising the control means, with which a voltage generated by the resonance circuit is limited to a predetermined maximum value.

## Description

This invention relates to an electronic identification system comprising a transmitter and receiver unit for generating an electromagnetic field modulated with information to be transferred to a label and at least one label, comprising a resonance circuit, for receiving and further processing the information, the label further comprising control means for temporarily enlarging the bandwidth of the resonance circuit for correspondingly enlarging the information flow between the transmitter and receiver unit and the label. The term label is understood to include responders and vice versa.

Such a system is disclosed in European patent application 0,297,688. To enable fast communication, two switchable work modes are defined. In a first mode use is made of a tuned resonance circuit with a relatively small bandwidth to transmit information over a relatively great distance and with a relatively low steed from the transmitter and receiver unit to the label or responder and vice versa. In a second mode use is made of a resonance circuit with a relatively large bandwidth to transmit information over a relatively small distance and with a relatively high speed from the transmitter and receiver unit to the label and vice versa. Because the bandwidth is enlarged, the amount of information that can be transmitted per unit time can also be enlarged. On the other hand, the reception sensitivity of the label diminishes as a result of the greater bandwidth, so that communication over a relatively great distance proves to be impossible.

These labels typically draw their energy from the electromagnetic field and use this energy to drive other electronic circuits of the label. These circuits typically comprise simple microprocessors (ICs) and a memory, cooperating therewith, for storing and further processing information and for generating information to be transmitted to the transmitter and receiver unit.

An important application of wireless electronic identification labels is the use of these labels as public transportation cards. For this application the label must have the dimensions of a credit card, as standardized in international standard ISO 7816. To also render the labels suitable for use in the listing infrastructure, a contact interface according to the above standard is of great importance. This combination of contact and wireless label is the subject of applicant's Dutch patent application 9101608. The wireless interface must be designed in such a manner that the contents of a label can be read at a great distance. Writing in a label should only be possible at a short distance because the user of such a wireless card must bring the card deliberately into a specific small zone to realize a transaction. The processing speed of the electronic identification system (transmitter and receiver unit and label) must be so high that, given a normal displacement of the card through the programming zone, a transaction can be realized. Especially in connection with the required protection against abuse, it is necessary to transmit many data from and to the labels. A fast communication link between label and transmitter and receiver unit is then necessary. To enable fast communication, in programmable identification labels such as disclosed, for instance, in applicant's European patent 0,287,175, the receiving coil of the label is not tuned but kept wide-banded. This means that the maximum distance between the label and the transmitter and receiver unit that can be bridged is very small. In fact, through the resonant rise of a resonance system, appreciably greater distances are attainable. Through this resonant rise, the bandwidth becomes small and the maximum communication speed between the label and the transmitter and receiver unit is limited.

In the prior art for programmable identification labels, particularly the design of the labels has been kept simple because a complex circuit is difficult to accommodate in a miniature label. Moreover, the power consumption of a complex receiving circuit in the label would entail is highly disadvantageous for the maximum working distance between the label and the transmitter and receiver unit. To keep the circuit simple, Mikron uses pulse-pause modulation in its label according to European patent application 0,473,569.

A highly comparable method is used in the IC of type number e5570 of Eurosil Electronic GmbH.

In the programmable identification tag (PIT) IC which is marketed by Philips under type number PCF7930, pulse-position modulation is used to transmit information to the label. To recover from the signal on a single receiving coil both the clock signal and data, some requirements are imposed on the signal levels. On the one hand, the amplitude must be sufficiently large to reconstruct the clock signals in simple manner and without power-consuming amplification, even at the lowest level of the modulated circuit voltage, and on the other hand the lowest level must be sufficiently low to render the difference with the highest level decodable in simple manner. In the case of pulse-position and pulse-duration modulation, too, in the label a reference level must be passed to enable the pulse to be determined. This reference level is mostly set as a fixed value. The large variation in the distance between the label and the transmitter and receiver unit makes for bite large variation in the field strength at the location of the label.

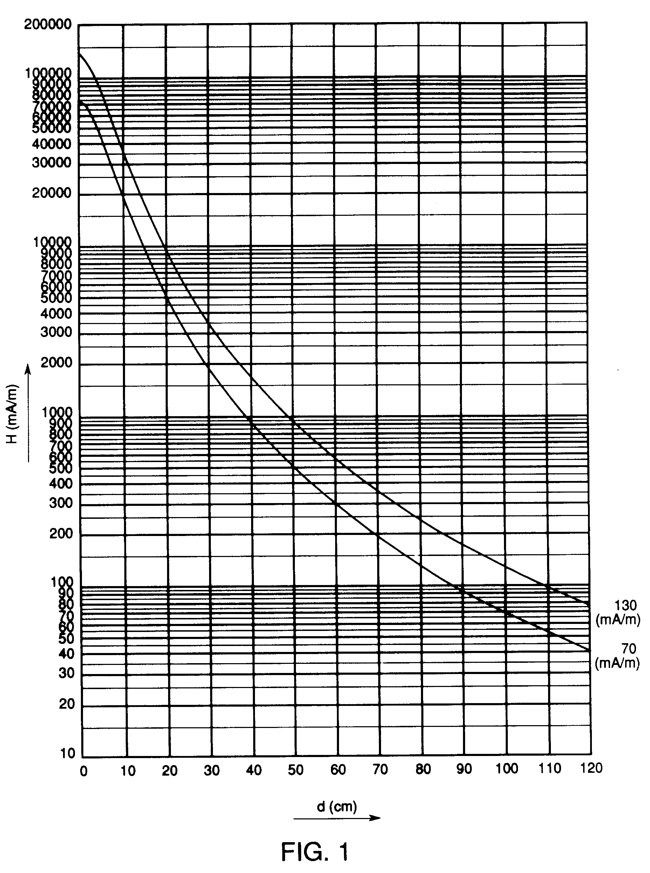

Fig. 1 shows a curve which represents, for a round transmitting antenna coil of a diameter of 20 cm, the field strength as a function of the distance between the label and an axis of a transmitting coil of the transmitter and receiver unit. The upper curve shows the variation in the field strength for an antenna transmitted signal of 120 mA/m and the lower curve shows the variation in the field strength for an antenna transmitted signal of 70 mA/m. This shows that in the case of a normally occurring operating distance of identification labels, a field strength variation of some orders of magnitude is quite possible. The alternating voltage induced in the coil may therefore fluctuate enormously. With modern very fine IC technology, the maximum voltage that can be processed without the occurrence of damage to the chip is limited to a low value of some volts. This means that measures have to be taken to protect the IC against this voltage which is too high for the IC.

Furthermore, a problem presents itself in that the receiver of a label which is located in the near field of a field radiated by the transmitter and receiver unit and modulated with information is saturated and, as a result, is unable to reconstruct the information through demodulation of the received transmitted signal. If a label is located on the axis of the transmitting antenna of the transmitter and receiver device, the strength of the received signal is inversely proportional to the third power of the distance between transmitting antenna and label and can thus vary strongly, as shown in Fig. 1. At a somewhat greater distance a disadvantage then presents itself in that - even when the bandwidth of the label is relatively small - errors occur as a result of a poor signal to noise ratio when recovering the information through demodulation.

The object of the invention is to provide a solution to all of these disadvantages and has as a characteristic feature that the label comprises a limiter circuit, comprising the control means, with which a voltage generated by the resonance circuit is limited to a predetermined maximum value.

Because the limiter circuit both limits the above voltage and, in a corresponding manner, controls the bandwidth of the resonance circuit, on the one hand the above electronic circuits of the labels cannot be damaged and on the other a proper demodulation can be carried out both in the case of very strong fields and in the case of very weak fields and, moreover, in the case of strong fields a very fast communication can be realized. According to the invention, these advantages are realized in combination.

More particularly, the invention has as a characteristic feature that the limiter circuit varies the bandwidth depending on the magnitude of the current flowing through the limiter circuit, which current is induced by the induction voltage generated in the resonance circuit, the label further comprising data reconstruction means for reconstructing the information on the basis of the magnitude of this current or a corresponding quantity. Because the demodulation is carried out on the basis of the current, which, however, in contrast with the voltage, is not limited, the information can also be reconstructed without any problems in the case of strong fields.

The invention provides a solution to the above-mentioned problems by switching automatically to the broad-banded mode as soon as the magnetic field strength at the location of the label exceeds a certain minimum value, which event is established by measuring the current in the limiter circuit, the current starting to flow in the limiter being used to reconstruct the data. By measuring the current rather than the voltage, as is conventional, the magnitude of the low level can be made sufficiently great, since the high level can still be measured unequivocally even in the case of large overload of the protection circuit. In the transmitter and receiver unit, for instance the emitted magnetic field is modulated by the data in such a manner that not this current itself but the difference in the current flowing in two successive periods of the carrier wave determines the meaning of the data, in such a manner that a very small difference in the current determines one logical level and a greater difference the other logical level, and the label being adapted to detect these differences in current.

The invention moreover provides a method to determine this difference in current in simple manner. Integration of the current during a period of the carrier wave, and back-integration during the subsequent period, for instance, leads to the exact determination of the differences in the level that occur in these periods. Precisely this difference can be determined much less critically than an absolute value of the low level, and hence can be used over a much greater distance range to transmit information to the labels.

It is known per se, for that matter, to protect a label against strong fields by switching, for instance, a Zener diode in parallel to the supply connection of the chip, or sometimes by two back-to-back series-connected Zener diodes which are connected in parallel to the resonance circuit. Because of the thus imposed upper limit of the voltage supplied to the IC, the setting of the modulation depth of the transmitter and receiver unit is very critical. A higher amplitude of the transmitted signal will not induce a higher voltage in the label because of this protection. The value of the low level belonging to a lowest extreme value of the modulation such as it is seen in the label has the desired value in only a small distance range. A reliable demodulation is therefore not possible. On the other hand, European patent application 0,287,175 provides an automatic adjustment of the transmission level of the transmitter and receiver device. The control loop required for this in particular renders the system slow.

A particular embodiment of the invention has as a characteristic feature that the limiter circuit enlarges the bandwidth when it is activated to limit the voltage referred to. Preferably, the limiter circuit is activated when the induction voltage generated in the resonance circuit by the field, or a quantity derived therefrom, exceeds a predetermined minimum value. The limiter circuit can vary the bandwidth depending on the magnitude of the current through the limiter circuit, which current is generated by the induction voltage generated in the resonance circuit.

According to another aspect of the invention, the label comprises data reconstruction means for reconstructing the information on the basis of the magnitude of the current through the limiter circuit, or a corresponding quantity, which is induced by the induction voltage generated in the resonance circuit.

More specifically, the limiter circuit comprises an assembly comprising at least one Zener diode and at least one resistor connected in series therewith, the assembly being connected to the resonance circuit.

An electronic identification system in which a Zener diode is used for limiting the voltage in a label or transponder is disclosed in European patent application 0,442,390. The transponder comprises a resonance circuit which is tuned to the frequency of electromagnetic pulses emitted by the transmitter and receiver device. The circuit further comprises a rectifier and an energy storage element coupled therewith, with which, respectively, energy is obtained from a received pulse and stored. The storage element functions as a supply voltage source of the transponder. The transponder further comprises a voltage limiter in the form of a series connected Zener diode and resistor. The Zener diode is connected with the storage element in such a manner that the voltage of the latter is limited to the Zener voltage. A component with a frequency-dependent impedance can be connected with the resonance circuit by means of a switching element, depending on the start of the voltage limiting action of the limiter; all this in such a manner that the resonance frequency of the circuit is changed when the limiter has been activated. Because the resonance frequency changes, less energy will be absorbed from the electromagnetic interrogation field. In contrast with the invention, therefore, the bandwidth is not temporarily enlarged for increasing the communication speed. The reconstruction of information is performed on the basis of the magnitude of the voltage rather than on the basis of current differences as discussed hereinbefore.

According to a particular embodiment of the invention the limiter further comprises a first and a second controllable switching unit which are driven depending on the current through the assembly, the first switching unit being connected with the resonance circuit, the first and second switching units forming a current mirror and the current flowing through the second switching unit being supplied to the data reconstruction means. Here it is advantageous when the field is modulated in amplitude with the information, this amplitude taking a first or a second level. As a result, demodulation can be implemented with a very minor chance of errors. In particular, to that end the data reconstruction means reconstruct the information on the basis of successive differences in the magnitude of the current or a quantity derived therefrom.

If the field is modulated in such a manner that the magnitude of successive differences in the magnitude of the current or a quantity derived therefrom represents the information, a highly reliable demodulation (reconstruction of information) proves to be possible. The same holds when the field is modulated in such a manner that the sign of successive differences in the magnitude of the current or a quantity derived therefrom represents the information.

In accordance with the invention, a further improvement is realized when the data reconstruction means comprise an integrator with which the current is integrated during at least one period of the modulation for determining the differences mentioned. The signal to noise ratio will thus be influenced favorably.

The invention also relates to a label responder suitable for use in an electronic identification system according to the present invention.

The invention will be further elucidated with reference to the accompanying drawings. In the drawings:
Fig. 1 shows the variation of the field strength as a function of the distance;
Fig. 2 shows a limiter circuit according to the prior art;
Fig. 3 shows a limiter circuit according to the invention;
Fig. 4 shows a limiter circuit according to the invention;
Fig. 5 shows different modulation forms according to the invention; and
Fig. 6 schematically shows a part of a circuit according to Fig. 2.

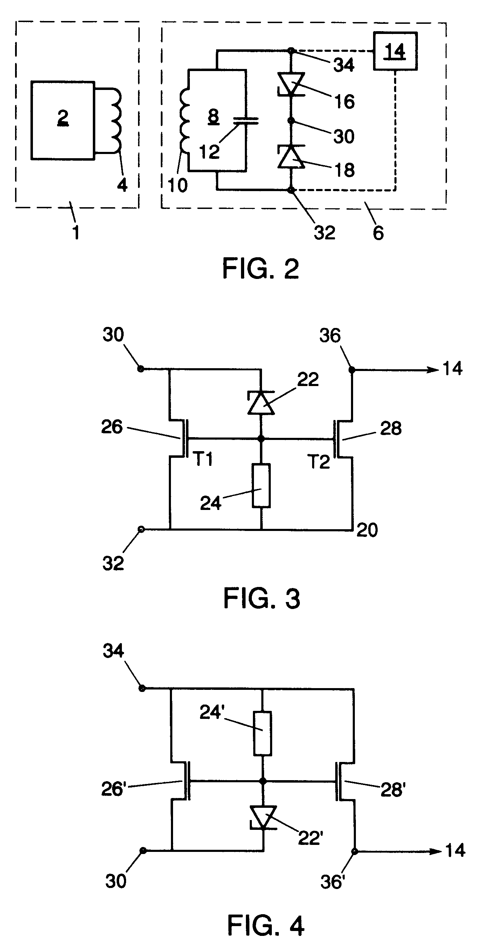

Fig. 2 schematically shows an example of an identification system which is known per se. The system comprises a transmitter and receiver unit 1 which comprises a combined transmitter and receiver 2 and an antenna 4 coupled thereto. In use, an electromagnetic interrogation field is generated by means of the antenna 4.

Fig. 2 further shows schematically a label which functions as an electronic information carrier and which can emit a predetermined code signal in response to an interrogation field. The label 6 comprises a resonance circuit 8 which in this example is built up from a coil 10 and a capacitor 12. The coil 10 and the capacitor 12 together form a tuned circuit with a relatively narrow bandwidth. The responder further comprises an electronic circuit 14 by which received information can be further processed and stored. To that end, the electronic circuit comprises, for instance, a microprocessor and a memory (ICs) coupled thereto. The electronic circuit 14 is connected to the resonance circuit 8 through lines which are dotted in the drawing. These are only exemplary, it being noted that the circuit 14 can also be coupled to the resonance circuit 8 in other ways. Two series-connected Zener diodes 16, 18 are connected in parallel to the resonance circuit 8. The Zener 16 and the Zener 18 are oppositely directed and limit the maximum voltage across the resonance circuit 8. In this existing technique this is necessary to protect the circuit 14 against too high a voltage that occurs when the field radiated by the transmitter and receiver unit 1 becomes too strong at the location of the resonance circuit 8. If the quality factor of the resonance circuit 8 is sufficiently high, the stringent symmetry of the circuit can be dispensed with. This means that either of the two Zener diodes 16, 18 can be omitted, i.e., can be replaced by a short-circuit, because in that case a damping of a positive peak in the resonance circuit 8 will also entail a damping of a negative peak in the resonance circuit 8 and the other way round. In other words, in the case of a high quality factor, the energy contents of the resonance circuit 8 cannot change rapidly and accordingly a limitation of the positive value of the circuit voltage also provides a limited negative value.

Fig. 3 shows a limiter circuit 20 according to the invention. This limiter circuit 20 is intended to replace the Zener 18 in Fig. 2. If so desired, the Zener 16 can also be replaced by a comparable limiter circuit as shown in Fig. 4. Because the operation of the limiter circuit according to Fig. 3 is identical to the operation of the limiter circuit according to Fig. 4, only the operation of the limiter circuit according to Fig. 3 will be further explained. If both the Zener 16 and the Zener 18 are replaced by the circuits as shown in Figs. 4 and 3, respectively, the label, within the framework of the invention, also comprises one limiter circuit. A limiter circuit is accordingly understood to mean, for instance, the circuit according to Fig. 3, the circuit according to Fig. 4 and a combined circuit according to Figs. 3 and 4. As described hereinbefore in relation to the Zeners 16 and 18, it will typically suffice to use, for instance, the circuit according to Fig. 3 alone. If necessary, however, an equivalent negative leg according to Fig. 4 can be added.

The limiter circuit according to Fig. 3 comprises a Zener 22 which is series-connected with a resistor 24. Further, the Zener circuit comprises a first switching unit in the form of a transistor 26 and a second switching unit in the form of a transistor 28. The gate of each of the transistors 26 and 28 is connected with the node of the Zener diode 22 and the resistor 24. The terminal poles 30 and 32 can be connected at the corresponding points 30 and 32 of Fig. 2, with omission of the Zener 18. As noted, the Zener 16 can be replaced by a short-circuit, i.e. be omitted, but it is also possible to replace the Zener 16 by the circuit according to Fig. 4, where the reference numerals 30 and 34 indicating the manner of connection.

The transistors 26 and 28 are connected according to the principle of a current mirror. The output 36 of transistor 28 can be connected with the electronic circuit 14 for processing received information.

The Zener diode 22 is, in this example, dimensioned for small currents. In a CMOS-IC the Zener diode 22 can also be imitated by means of a stack of transistors connected as a diode.

The operation of the circuit is as follows. As soon as the voltage across the resonance circuit 8 becomes greater than the Zener voltage, a small current will start to flow in the Zener diode 22. As a result, the gate voltage of the transistor 26 rises. As soon as this voltage exceeds the threshold voltage of the transistor 26, a current starts to flow in the transistor 26. The maximum voltage that can arise between source and drain of the transistor 26 is limited to the sum of the threshold voltage of transistor 26 and the Zener voltage of the Zener diode 22. The transistor 28 is connected in such a manner that the gate source voltage of this transistor is equal to that of the transistor 26. Given equal transistors, this means that in the drain line of transistor 28 the same current wants to start flowing as in that of transistor 26. By making the transistor 28 much smaller than the transistor 26, the current flowing through transistor 28 will be much smaller than the current flowing through transistor 26. However, the two currents will vary directly proportionally to each other because the transistors are connected as a current mirror. In other words, the value of the current through transistor 28 is proportional to the total limiter current. If in the circuit according to Fig. 3 a limiter current starts to flow between the points 30 and 32, this will also have the effect, in accordance with the invention, that the bandwidth of the resonance circuit 8 is enlarged. In other words, the limiter circuit according to Fig. 3 inherently comprises control means for enlarging and reducing the bandwidth of the resonance circuit depending on the field strength. According to an important aspect of the invention, the limiter circuit 3 moreover has the property of supplying a current - in this example the current flowing through transistor 28 - which is suitable to be further processed for the demodulation, i.e. the reconstruction of information which has been transmitted by the transmitter and receiver unit 1.

The amplitude modulation of the transmitter and receiver device 1 is, for instance, such that for the transfer of logical "one-and" a strong magnetic field is continuously generated. A logical zero is driven by lowering the field strength for a period. The output of the current mirror of transistor 28 is supplied to an integrator circuit. This integrator circuit is driven in such a manner that integration always occurs over a full period of the carrier wave and the next full period is integrated backwards. At a constant amplitude the integrator output at the end of each period will be precisely 0 again. In the case of a dip in the field strength during one period, the integrator circuit will be clearly positive at the end of that period. After a next period in which the field strength takes the high level again, the integrator will clearly give a negative signal. Interpretation of the integrator output is realized in conventional manner. In this manner the maximum signaling speed is one bit per period of the carrier wave of the electromagnetic field. The bandwidth necessary for this is equal to the frequency of the carrier wave. By extending the integration to cover several periods, the necessary bandwidth can be reduced, though at the expense of the signaling speed.

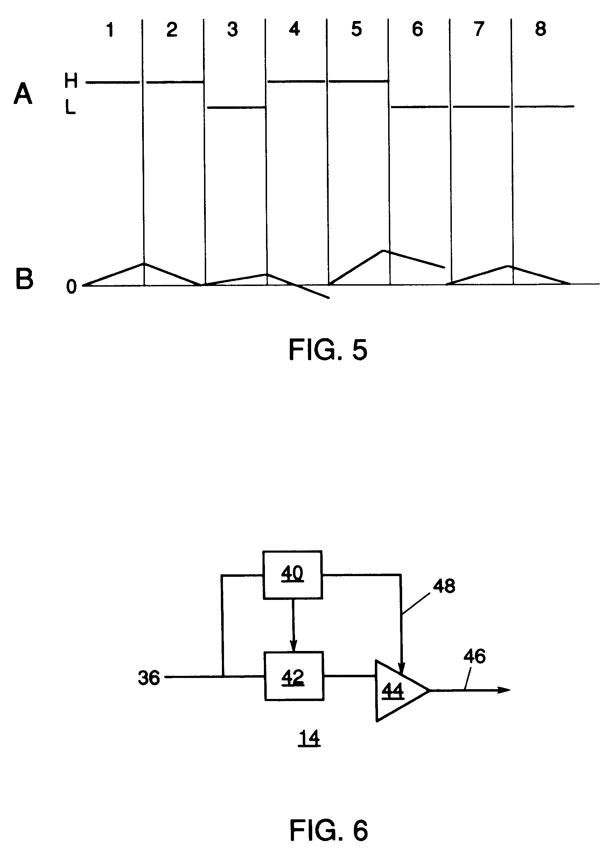

The above will be further explained with reference to a number of modulation examples according to Fig. 5 and an example of a part of the circuit 14 according to Fig. 6.

Fig. 6 shows a part of the circuitry of circuit 14 which is connected with point 36 of the circuit according to Fig. 3. In Fig. 6, the part of the circuitry according to circuit 14 comprises a unit 40, known per se, for obtaining a clock signal from the received electromagnetic field. This clock signal corresponds with the periods which will be discussed hereinafter with reference to Fig. 5. Further provided are an inverter 42 and an integrator 44 coupled with the output of the inverter 42. The output 46 of the integrator 44 is coupled with, for instance, a microprocessor for further processing the demodulated information delivered by the integrator 44. In this example the inverter 42 is clocked with the clock signal derived by the unit 40. The signal supplied to the inverter 42 is transmitted one-on-one in a first period and inverted in a subsequent period. The periods are defined by the clock signal. In this example one period corresponds with one period of the clock signal. It is also possible, however, that, for instance, two or more periods of the clock signal correspond with one period of the inverter. In addition, the integrator 44 can be reset to zero at the beginning of certain periods by the unit 40, depending on the clock signal.

In Fig. 5 graph A shows a possible amplitude modulation of the electromagnetic field and an attendant proportional variation of the current through the transistor 28. The amplitude modulation here takes place between a first and a second predetermined value. In the example the amplitude is chosen to be high in a first and second period, low in a third period, high in a fourth and fifth period, low in a sixth period and low in a seventh and eighth period. Graph B shows the magnitude of the output signal of the integrator 44, the integrator having been reset at the end of the second, fourth, sixth and eighth periods. Further the signal supplied to the integrator is transmitted one-on-one in the first, third, fifth and seventh periods, whereas the signal is inverted in the second, fourth, sixth and eighth periods. As is apparent, the output signal rises during the first period as a result of the integration, whereafter the output signal decreases to zero again as a result of the negative integration. During the third period the output signal rises to a lesser extent than in the first period because the current through the transistor 28 is smaller. During the fourth period, however, the output signal decreases strongly because the current through the transistor 28 is large. Here the output signal of the integrator at the end of the fourth period will be negative. Accordingly, it can be derived that at the end of the sixth period the output signal of the integrator is positive and the output signal of the integrator at the end of the eighth period is approximately zero.

On the basis of the data of Fig. 5, for instance the following modulation can be used. A logical one is defined by transmitting a signal as shown in the first and second periods, whilst a logical zero is defined by transmitting a signal as shown in the third and fourth periods. This means that the field is modulated in such a manner that the magnitude of successive differences in the magnitude of the current represents the information. If at the end of an even (second, fourth, etc.) period the output signal of the integrator is approximately equal to zero, this means that a logical one has been transmitted, whereas a logical zero has been transmitted when at the end of an even period the corresponding output signal is negative. However, it is also possible, for instance, to define a logical one by transmitting a signal as shown in the third and fourth periods and to define a logical zero by transmitting a signal as shown in the fifth and sixth periods. This means that the field is modulated in such a manner that the sign of successive differences in the magnitude of the current represents information. At the transition from the third to the fourth period, a positive sign is then involved because the current increases, whereas at the transition from the fifth to the sixth period, a negative sign is involved because the current decreases. At the end of the fourth period the output signal of the integrator is negative and thereby indicates a logical one, whereas at the end of the sixth period the output signal of the integrator is positive, whereby a logical zero is indicated.

It will be clear that many variants are conceivable for the amplitude modulation of the electromagnetic field, with a demodulation being performed on the basis of current differences in transistor 28. Thus, it is of course also possible to use the seventh and eighth periods for defining a logical one and the third and fourth periods for defining a logical zero. These and other forms of modulation are all understood to fall within the scope of the invention. It is of course also possible to implement the modulation in such a manner that a high current corresponds with a logical one and a low current with a logical zero. In that case the signaling speed is one bit per period of the carrier wave.

## Claims

1. An electronic identification system comprising a transmitter and receiver unit for generating an electromagnetic field modulated with information to be transferred to a label and at least one label, comprising a resonance circuit, for receiving and further processing said information, the label further comprising control means for temporarily enlarging the bandwidth of the resonance circuit for correspondingly enlarging the information flow between the transmitter and receiver unit and the label, characterized in that the label comprises a limiter circuit, comprising the control means, with which a voltage generated by the resonance circuit is limited to a predetermined maximum value.

2. An electronic identification system according to claim 1, characterized in that the limiter circuit enlarges the bandwidth when it is activated to limit said voltage.

3. An electronic identification system according to claim 2, characterized in that the limiter circuit is activated when the induction voltage generated in the resonance circuit by said field, or a quantity derived therefrom, exceeds a predetermined minimum value.

4. An electronic identification system according to claim 3, characterized in that the limiter circuit varies the bandwidth depending on the magnitude of the current through the limiter circuit, which current is induced by the induction voltage generated in the resonance circuit.

5. An electronic identification system according to any one of the preceding claims, characterized in that the label comprises data reconstruction means for reconstructing said information on the basis of the magnitude of the current through the limiter circuit, or a quantity corresponding therewith, which is induced by the induction voltage generated in the resonance circuit.

6. An electronic identification system according to claim 3, characterized in that the limiter circuit varies the bandwidth depending on the magnitude of the current through the limiter circuit, which current is induced by the induction voltage generated in the resonance circuit, the label further comprising data reconstruction means for reconstructing said information on the basis of the magnitude of this current or a quantity corresponding therewith.

7. An electronic identification system according to any one of the preceding claims, characterized in that the limiter circuit comprises an assembly comprising at least one Zener diode and at least one resistor connected in series therewith, the assembly being connected with the resonance circuit.

8. An electronic identification system according to claims 6 and 7, characterized in that the limiter further comprises first and second controllable switching units which are driven depending on the current through the assembly, the first switching unit being connected with the resonance circuit, the first and second switching units forming a current mirror and the current flowing through the second switching unit being supplied to the data reconstruction means.

9. An electronic identification system according to claim 8, characterized in that said field is modulated in amplitude with said information, the amplitude taking a first or second level.

10. An electronic identification system according to claim 8 or 9, characterized in that the data reconstruction means reconstruct the information on the basis of successive differences in the magnitude of the current or a quantity derived therefrom.

11. An electronic identification system according to claim 10, characterized in that the field is modulated in such a manner that the magnitude of successive differences in the magnitude of the current or a quantity derived therefrom represents the information.

12. An electronic identification system according to claim 10, characterized in that the field is modulated in such a manner that the sign of successive differences in the magnitude of the current or a quantity derived therefrom represents the information.

13. An electronic identification system according to any one of claims 9-12, characterized in that the data reconstruction means comprise an integrator with which the current is integrated during at least one period of the modulation for determining said differences.

14. A label suitable for use in an electronic identification system according to any one of the preceding claims.
